# FASCICULE DE BREVET EUROPEEN

(11) **EP 3 096 625 B1**
(45) Date de publication et mention de la délivrance du brevet: **11.03.2020**
(21) Numéro de dépôt: 15700706.3
(22) Date de dépôt: 20.01.2015
(51) Int. Cl.: A23B 7/16, A01N 31/00

(54) **COMPOSITIONS ANTI-GERMINATIVES POUR ENROBAGE DES BULBES ET TUBERCULES ET LEUR UTILISATION POUR LE TRAITEMENT ANTI-GERMINATIF**
SPRIESSHEMMUNGSZUSAMMENSETZUNGEN ZUR BESCHICHTUNG VON KNOLLEN ODER ZWIEBELN UND VERWENDUNG DAVON ZUR SPRIESSHEMMUNGSBEHANDLUNG
ANTI-SPROUTING COMPOSITIONS FOR COATING BULBS AND TUBERS AND USE THEREOF FOR ANTI-SPROUTING TREATMENT

(30) Priorité: 20.01.2014 FR 1450435; 13.06.2014 FR 1455442
(43) Date de publication de la demande: 30.11.2016
(73) Titulaire: Xeda International S.A., 13670 Saint Andiol (FR)
(72) Inventeur: SARDO, Alberto, F-13160 Chateaurenard (FR)
(74) Mandataire: Lavoix
(86) Numéro de dépôt international: PCT/EP2015/050928
(87) Numéro de publication internationale: WO 2015/107206

(56) Documents cités:
- FR-A1- 2 563 974
- FR-A1- 2 891 438
- US-A- 4 123 558
- M T Wuand ET AL: "A Research Note USE OF SPRAY LECITHIN FOR CONTROL OF GREENING AND GLYCOALKALOID FORMATION OF POTATO TUBERS", , 1 janvier 1977 (1977-01-01), XP055165993, Extrait de l'Internet: URL:http://onlinelibrary.wiley.com/store/1 0.1111/j.1365-2621.1977.tb14514.x/asset/j. 1365-2621.1977.tb14514.x.pdf?v=1&t=i5icaas 6&s=3192e852b9cb57e14954b4910c492892d91c65 bb [extrait le 2015-01-29]

## Description

La présente invention concerne de nouvelles compositions pour l'enrobage des bulbes et tubercules, ainsi que le procédé de traitement anti-germinatif au moyen desdites compositions par application auxdits bulbes et tubercules.

La germination est un problème critique lors de la conservation des pommes de terre et des compositions d'enrobage généralement à base d'agent actif synthétique tel que le CIPC ont été proposées. On cherche également à éviter le phénomène de respiration des pommes de terre qui aboutit à une perte de poids et un aspect flétri rédhibitoire pour les consommateurs.

Des compositions d'enrobage pour empêcher le verdissement et la germination des pommes de terre à base d'ingrédients acceptables sur le plan alimentaire sont connues. Ainsi, Wu et al (J. Amer. Soc. Hort. Sci.97(5) 614-616, 1972) a proposé des compositions à base d'huile de mais. Néanmoins, les enrobages huileux qui en résultent créent un phénomène de condensation avec l'humidité ambiante.

US 2,755,189 décrit des compositions à base de cire. Cependant, la pellicule ainsi formée nécessite un séchage et l'enrobage se fait par immersion dans une cire chaude qui peut endommager la pomme de terre.

WO 2010/031983 décrit l'application de compositions d'enrobage sur des bulbes ou tubercules. Néanmoins, lesdites compositions sont à base de résines et nécessitent un séchage des pommes de terre avant et après traitement. Ceci implique des installations supplémentaires et un cout additionnel important. FR 2 563 974 décrit une composition comprenant un composant lipophile, un émulsifiant, un solvant et un anti-oxydant et son enrobage sur des pommes.FR 2 891 438 décrit un procédé antigerminatif de tubercules ou de bulbes utilisant de l'eugénol et un émulsifiant.

Il est donc désirable de mettre à disposition un nouveau procédé d'enrobage pour lutter contre la germination et/ou la perte de poids des bulbes et tubercules.

Ainsi, il est décrit des compositions d'enrobage pour bulbes et tubercules acceptables sur le plan alimentaire, permettant d'empêcher ou retarder efficacement la germination, selon un procédé aisé à mettre en œuvre.

Il est décrit une composition d'enrobage pour bulbes et tubercules comprenant :
- de 0.1 à 20% de un ou plusieurs composants lipophiles choisis parmi les huiles végétales, les huiles minérales, la lécithine, les acides gras et leurs mélanges,
- de 1 à 20% de un émulsifiant ou mélange d'émulsifiants choisi parmi les émulsifiants anioniques ou non-ioniques à balance hydrophile/lipophile (HLB) supérieure à 6,- de 10 à 80% de un solvant choisi parmi l'eau, le monopropylèneglycol, l'éthanol et leurs mélanges, et
de 1 à 10% d'anti-oxydant(s).
lesdits pourcentages étant en poids/volume.

La présente invention concerne un procédé de traitement anti-germinatif des bulbes et tubercules comprenant l'application de 0,1 à 2 kg de composition par tonne de bulbes et tubercules, telle que la composition comprend:
- de 0.1 à 20% de un ou plusieurs composants lipophiles choisis parmi les huiles végétales, les huiles minérales, la lécithine, les acides gras et leurs mélanges,
- de 1 à 30% de un émulsifiant ou mélange d'émulsifiants choisi parmi l'acide oléique éthoxylé, l'acool laurique, les sucroesters, et leurs mélanges ,
- de 10 à 80% de un solvant choisi parmi l'eau, le monopropylèneglycol, l'éthanol et leurs mélanges, et
- de 0 à 10% d'anti-oxydant(s)
lesdits pourcentages étant en poids/volume.

A titre de bulbes et tubercules, la présente invention vise notamment les pommes de terre.

Selon un mode de réalisation, ladite composition est sous forme de solution aqueuse ou de dispersion aqueuse.
Selon un mode de réalisation, ladite composition comprend du monopropylèneglycol.

Généralement, ladite composition comprend de 5 à 50 %, notamment de 10 à 40 % dudit composant huileux dans l'eau

On entend par émulsifiants non ioniques à balance hydrophile/lipophile (HLB) élevée les émulsifiants à HLB comprise entre 8 et 14, notamment supérieure à 6.
On peut citer à titre d'émulsifiants non ioniques à balance hydrophile/lipophile (HLB) élevée, les acides gras éthoxylés tels que l'acide oléique éthoxylé 10 moles, les sucroesters, les sucroglycérides, les polyalkylglucosides, les esters de polyalkylglucosides, les tweens, les alcools gras éthoxylés, tels que l'alcool laurique éthoxylé 6, 10 ou 12 moles, les sels d'acides gras et leurs mélanges.

Le terme « huile végétale » désigne toute huile végétale constituée de glycérine triestérifiée par des acides gras notamment, tel que l'acide oléique. On peut notamment citer les huiles de tournesol, soja, colza, maïs, arachide, olive.

Ainsi, bien que les compositions décrites ci-avant présentent un effet anti-germination, il est possible d'ajouter un ou plusieurs agents anti-germinatifs.

Selon un mode de réalisation, les compositions peuvent également comprendre en outre un ou plusieurs autres agents, tels que les agents fongicides, bactéricides.

Les huiles essentielles sont connues pour présenter de tels effets.
Ainsi, selon un mode de réalisation, les compositions peuvent en outre comprendre une ou plusieurs huiles essentielles. Généralement, lesdites compositions comprennent de 2 à 10% (poids) d'huile essentielle.

Le terme « huile essentielle » appliqué ici vise l'huile essentielle ainsi que un de ses constituants et/ou ses mélanges. Le terme « constituant » fait ici référence aux constituants actifs, c'est-à-dire présentant une activité antigerminative, bactéricide, fongicide et/ou antioxydante.
Ainsi, à titre d'huile essentielle, on peut notamment citer l'huile de menthe, et/ou l'huile de thym et/ou l'huile d'origan et/ou l'huile de girofle, ainsi que leurs constituants, à savoir la L-carvone, le thymol, le carvacrol et l'eugénol respectivement et/ou leurs mélanges ; plus particulièrement l'huile de menthe, l'huile de girofle, la L-carvone, et l'eugénol.
Lesdites huiles comprennent généralement de 50 à 90% dudit constituant ; ainsi, l'huile de girofle contient généralement environ 80% d'eugénol et l'huile de menthe environ 70% de L-carvone.

A titre d'agent anti-oxydant, on peut également citer l'acide citrique, l'acide tartrique, l'acide acétique, l'acide ascorbique et leurs mélanges, ainsi que leurs sels.
Ainsi, selon un mode de réalisation la composition peut comprendre de façon optionnelle l'eugénol, l'acide citrique, l'acide ascorbique, l'acide tartrique et/ou l'acide acétique, ainsi que les sels de ces acides.

Il est entendu que l'acide citrique, tartrique, ascorbique ou acétique, peuvent être présents sous leur forme libre (acide) ou sous forme salifiée associé à un contre-ion cationique.
A titre de sel, on peut notamment citer les sels de métal alcalin, tels que les sels de potassium, de sodium.

Selon un mode de réalisation, ladite composition comprend :
- de 0.1 à 20 %, notamment 1 à 10 % dudit composant(s) huileux et/ou
- de 10 à 80 %, notamment 20 à 70 % de solvant(s) ; et/ou
- de 1 à 30 %, notamment 10 à 20 %d'émulsifiant(s), et/ou
- de 0 à 10%, notamment de 1 à 8 % d'anti-oxydant(s).

Selon un mode de réalisation, ladite composition comprend :
- de 0.1 à 20 % dudit composant(s) huileux ;
- de 10 à 80 % de solvant(s) ;
- de 1 à 30 % d'émulsifiant(s), et
- de 0 à 10% d'anti-oxydant(s).

Selon un mode de réalisation, ladite composition comprend :
- de 0.1 à 10 % de lécithine ;
- de 10 à 80 % de solvant comprenant du monopropylèneglycol et de l'eau ;
- de 1 à 30 % d'émulsifiant(s) choisis parmi l'acide oléique éthoxylé, l'acool laurique, les sucroesters, et leurs mélanges ; et
- de 0,1 à 10% d'acide citrique ou de citrate alcalin.

Selon un mode de réalisation, les compositions sont exemptes de résine ou cire.

Selon un autre mode de réalisation, les compositions peuvent comprendre un ou plusieurs additifs, notamment connus pour l'effet phytosanitaire qu'ils procurent.

Les compositions présentent également l'avantage de diminuer la phytotoxicité qui peut être observée lors de l'application d'huiles essentielles et/ou leurs constituants. Ainsi, les compositions présentent une phytotoxicité moindre que les formulations concentrées et ce à dose totale équivalente en principe actif.
D'autre part, les solutions sont parfaitement stables jusqu'à plusieurs mois, de préférence au moins un mois, à basse température, de préférence jusqu'à 0°C. Ceci permet donc à l'utilisateur final de stocker les compositions dans les chambres froides, par exemple.

on décrit également un bulbe ou tubercule enrobé d'un film constitué par une composition telle que décrite ci-avant.

On décrit également le procédé de préparation desdites compositions.
Ledit procédé comprend le mélange des constituants, par exemple sous agitation. Selon un mode de réalisation, les compositions sont préparées par mélange des émulsifiants et de l'éthanol et du solvant éventuels, dans l'huile végétale, à température ambiante de préférence, puis par l'ajout, sous agitation, de l'huile essentielle éventuelle.
Si nécessaire, il est possible de chauffer le mélange réactionnel jusqu'à obtenir une dissolution satisfaisante.
Si nécessaire, les compositions obtenues sont laissées à reposer pendant un temps compris entre quelques heures et plusieurs jours avant utilisation.

La composition présente une activité anti-germinative renforcée, de sorte qu'il est possible d'envisager de très faibles doses d'application. Ainsi, le procédé d'enrobage est dit ULV (Ultra Low Volume).
Avantageusement, le procédé selon l'invention comprend l'application de 0,2 à 1 kg de composition par tonne de bulbes et tubercules.
La quantité optimale de composition traitante devant être appliquée aux bulbes et tubercules dépend de la nature desdits bulbes et tubercules concernés et du mode d'application sélectionné.

De façon inattendue et avantageuse, les compositions ne nécessitent pas de séchage des bulbes et tubercules préalablement à l'enrobage.
Selon un mode de réalisation, le procédé selon l'invention comprend l'application de ladite composition sur bulbes ou tubercules humides.
Avantageusement, il n'est pas non plus nécessaire de sécher les bulbes et tubercules enrobés par ladite composition.
Selon un mode de réalisation, le procédé ne comprend donc pas d'étape de séchage, antérieurement et/ou postérieurement à l'enrobage.

Selon un mode de réalisation, ledit procédé comprend l'application de ladite composition au moyen du dispositif décrit dans la demande WO 2010/031983, incorporée ici par référence.
Plus précisément, le procédé selon l'invention peut comprendre l'application de la composition au moyen d'un dispositif d'enrobage de bulbes ou tubercules, le dispositif ayant une zone d'enrobage comprenant :
- un convoyeur d'enrobage prévu pour entraîner les bulbes ou tubercules selon une direction longitudinale ;
- un dispositif d'application d'une composition d'enrobage sur les bulbes ou tubercules entraînés sur le convoyeur d'enrobage ;
caractérisé en ce que le convoyeur d'enrobage comprend un châssis, une pluralité de brosses rotatives fixes selon la direction longitudinale par rapport au châssis, et un ensemble motorisé d'entraînement des brosses en rotation autour d'axes transversaux respectifs par rapport au châssis, les brosses étant disposées de manière à définir ensemble une surface de support et d'entraînement des bulbes ou tubercules et étant prévues pour faire rouler les bulbes ou tubercules pendant l'application de la composition d'enrobage.

Selon un mode de réalisation, le dispositif d'application est prévu pour projeter la composition d'enrobage sur les bulbes ou tubercules à une pression contrôlée supérieure à la pression atmosphérique.
Le dispositif d'application comprend au moins un organe de projection disposé au dessus du convoyeur d'enrobage, et un organe doseur prévu pour alimenter le ou chaque organe de projection en composition d'enrobage à un débit contrôlé.
Les brosses présentent généralement un diamètre externe compris entre 60 et 180 mm. D'autres caractéristiques et avantages ressortiront de la description détaillée du dispositif ci-dessous.
Le dispositif comporte :
- une zone d'enrobage des bulbes ou tubercules ;
- une zone de séchage des bulbes ou tubercules enrobés ;
- une enceinte fermée, dans laquelle est disposée la zone d'enrobage.
La zone d'enrobage comporte un convoyeur d'enrobage prévu pour entraîner les produits alimentaire selon une direction longitudinale, et un dispositif d'application d'une composition d'enrobage sur les bulbes ou tubercules entraînés sur le convoyeur.
Le convoyeur d'enrobage comprend un châssis, une pluralité de brosses rotatives montées sur le châssis, et un ensemble motorisé d'entraînement des brosses en rotation autour d'axes transversaux respectifs par rapport au châssis.
Les brosses sont cylindriques, et présentent chacune un diamètre extérieur compris entre 60 et 180 millimètres, de préférence compris entre 80 et 120 millimètres. En tout état de cause, les brosses doivent présenter un diamètre extérieur supérieur au diamètre des bulbes ou tubercules à traiter.
Les brosses sont fixes en translation selon les directions longitudinales et transversales par rapport au châssis. Elles ne présentent donc qu'un seul degré de liberté par rapport au châssis, en rotation autour de leurs axes respectifs.
Les brosses sont disposées parallèlement les unes aux autres, et sont régulièrement espacées longitudinalement. L'espacement est prévu de telle sorte que les brosses soient sensiblement tangentes les unes aux autres, ou que les poils de chaque brosse pénètrent légèrement dans les brosses voisines. Les axes des brosses sont situés dans un même plan, sensiblement horizontal, de telle sorte que les brossent définissent ensemble une surface de support et d'entraînement des bulbes ou tubercules. Ainsi, les bulbes ou tubercules déposés à une extrémité amont de la surface sont entraînés par les brosses jusqu'à l'extrémité aval de la surface. Les brosses sont prévues pour faire rouler les bulbes ou tubercules sur eux-mêmes au cours du déplacement longitudinal de ces produits depuis l'extrémité amont vers l'extrémité aval de la surface, indépendamment de leur dimension et de leur forme, y compris dans le cas de pommes de terre plates.
Ce roulement est obtenu d'abord du fait que la surface présente des bosses, aux sommets des brosses, et des creux entre les brosses. Le bulbe ou tubercule atteignant le sommet d'une brosse va rouler dans le creux suivant. Par ailleurs, les poils des brosses, en s'appuyant sur la surface extérieure du bulbe ou tubercule, tendent à faire tourner ce produit en sens inverse de la brosse. Ce mouvement est similaire à l'entraînement d'une roue dentée par un pignon
L'ensemble motorisé entraîne les brosses en rotation autour de leurs axes respectifs. Les brosses sont mises en rotation toutes dans le même sens.
Le dispositif d'application de la composition d'enrobage est prévu pour projeter la composition d'enrobage sur les bulbes ou tubercules circulant sur le convoyeur d'enrobage, à une pression contrôlé supérieure à la pression atmosphérique, et avec un débit contrôlé. La pression et le débit sont choisis en fonction du type de bulbe ou tubercule à traiter, et en fonction de la nature de la composition d'enrobage.
Le dispositif d'application comprend typiquement une cuve de stockage d'une réserve de composition d'enrobage, une pluralité de gicleurs repartis longitudinalement au-dessus du convoyeur, et un organe doseur prévu pour alimenter les gicleurs en composition d'enrobage à partir de la cuve.
Le gicleur peut être de tout type adapté. Il comporte typiquement une buse permettant de régler la largeur du jet de composition d'enrobage projeté vers le convoyeur. L'organe doseur est par exemple une pompe doseuse à débit réglable.

Les buses de projection des gicleurs sont typiquement placées à 15 centimètres au dessus de la surface sur laquelle se déplacent les bulbes ou tubercules.
Le débit de composition d'enrobage est typiquement compris entre 1 et 10 litres par tonne de préférence 2 et 5 litres par heure. La pression d'alimentation des gicleurs est typiquement comprise entre 1 et 10 de préférence 2 et 5 bars.
Bien que le dispositif selon l'invention ne soit pas limité quant à la nature des compositions d'enrobage appliquées, il est particulièrement adapté à l'application de compositions d'enrobage selon l'invention.
Le fonctionnement du dispositif d'enrobage décrit ci-dessus va maintenant être détaillé.
Les bulbes ou tubercules enrobés sont déposés à l'extrémité amont de la surface du convoyeur d'enrobage. Ils sont déposés manuellement par un opérateur, ou sont amenés par un autre convoyeur.
Les bulbes ou tubercules sont entrainés longitudinalement depuis l'extrémité amont jusqu'à l'extrémité aval par les brosses. Les poils des brossent glissent contre la peau des bulbes ou tubercules en entrainant longitudinalement ces produits.
Les bulbes ou tubercules de formes générales arrondis, par exemples les pommes, les poires, les agrumes, les pommes de terres, etc., roulent pendant leurs déplacements longitudinales sur le convoyeur d'enrobage.
Pendant le déplacement des bulbes ou tubercules sur le convoyeur, le dispositif d'application projette la composition d'enrobage vers les bulbes ou tubercules. La pompe aspire la solution d'enrobage dans le réservoir et refoule composition vers les gicleurs à une pression déterminée et à un débit déterminé. Les gicleurs projettent la composition d'enrobage vers le bas, c'est-à-dire vers les bulbes ou tubercules. Du fait que les bulbes ou tubercules roulent à la surface du convoyeur, toutes les zones de la peau du bulbe ou tubercule sont successivement tournées vers les gicleurs et reçoivent une dose de composition d'enrobage. Ainsi, le fait que les bulbes ou tubercules roulent sur le convoyeur et l'utilisation d'un dispositif d'application permettant de projeter la composition d'enrobage à un débit et à une pression contrôlés sur les bulbes ou tubercules, permettent un excellent contrôle de l'épaisseur de composition d'enrobage déposée à la surface du bulbe ou tubercule, et une application particulièrement uniforme sur toute la peau du bulbe ou tubercule.
Les bulbes ou tubercules quittent le convoyeur d'enrobage à l'extrémité aval de la surface et passent directement à une extrémité où ils sont prélevés à la main par des opérateurs pour être conditionnés ou sont par exemple repris par un autre convoyeur.
Ainsi, le dispositif d'enrobage décrit ci-dessus permet d'obtenir un enrobage de bonne qualité, et ce pour toutes sortes de bulbes ou tubercules.

Le fait que le convoyeur d'enrobage comporte des brosses prévues pour faire rouler les bulbes ou tubercules pendant l'application de la composition d'enrobage contribue à l'obtention d'un film de composition d'enrobage uniforme et d'épaisseur contrôlée sur les bulbes ou tubercules.
Le dispositif d'enrobage peut présenter de multiples variantes.
Le nombre de rouleaux du convoyeur d'enrobage peut varier, en fonction des besoins. Le nombre de gicleurs est également variable, un seul gicleur pouvant être envisagé, ou un grand nombre de gicleurs, en fonction du type et de la taille des bulbes ou tubercules à traiter, de la vitesse de déplacement des bulbes ou tubercules à la surface du convoyeur d'enrobage, du type de composition d'enrobage, etc.
Le dispositif d'application peut ne pas être du type prévu pour projeter la composition d'enrobage sous une pression supérieure à la pression atmosphérique. Le dispositif d'application pourrait être un dispositif de douchage, prévu pour faire couler la composition d'enrobage sur les bulbes ou tubercules, à une pression correspondant à la pression atmosphérique. Le dispositif d'application pourrait également être un dispositif de pulvérisation par nébulisation ou atomisation.

Avantageusement, le séchage de la composition est réalisé par simple contact des bulbes et tubercules enrobés avec l'air ambiant. Il n'est pas nécessaire de prévoir de moyens de séchage additionnels tels que convoyeur de séchage, prise et sortie d'air, organe de circulation d'air.
Ainsi, selon un mode de réalisation, le dispositif d'enrobage est dénué de convoyeur de séchage, prise et sortie d'air et/ou organe de circulation d'air.

Selon un mode de réalisation, le procédé selon l'invention comprend l'étape préalable de nettoyage desdits bulbes ou tubercules, par exemple par lavage, éventuellement suivi de séchage, ou par brossage à sec.

Selon un mode de réalisation, le procédé peut comprendre une étape de préchauffage de la composition pour en réduire la viscosité et améliorer la qualité de l'enrobage.

L'application peut être réalisée une ou plusieurs fois en cours de stockage.

La composition selon l'invention a principalement une action anti-germinative. Il semblerait que cette activité soit liée à la fine couche homogène créée par le procédé selon l'invention qui permet de neutraliser les échanges gazeux entre la pomme de terre et l'air environnant. Ainsi, l'activité anti-germinative des compositions selon l'invention peut s'accompagner d'une activité anti-transpirante.
On entend au sens de l'invention une action « anti-germinative et/ou anti-transpirante » une action visant à inhiber et/ou retarder la germination et/ou la perte de poids.

Selon un autre objet, la présente invention concerne également un procédé de traitement pour empêcher ou retarder la germination et/ou la perte de poids des bulbes et tubercules comprenant la mise en oeuvre du procédé d'enrobage selon l'invention.
Bien évidemment, les modes de réalisation préférés indiqués ci-avant ou ci-après s'entendent pris isolément ou en combinaison.

Sauf mention contraire, les pourcentages indiqués ci-avant et ci-après sont donnés en poids/volume.

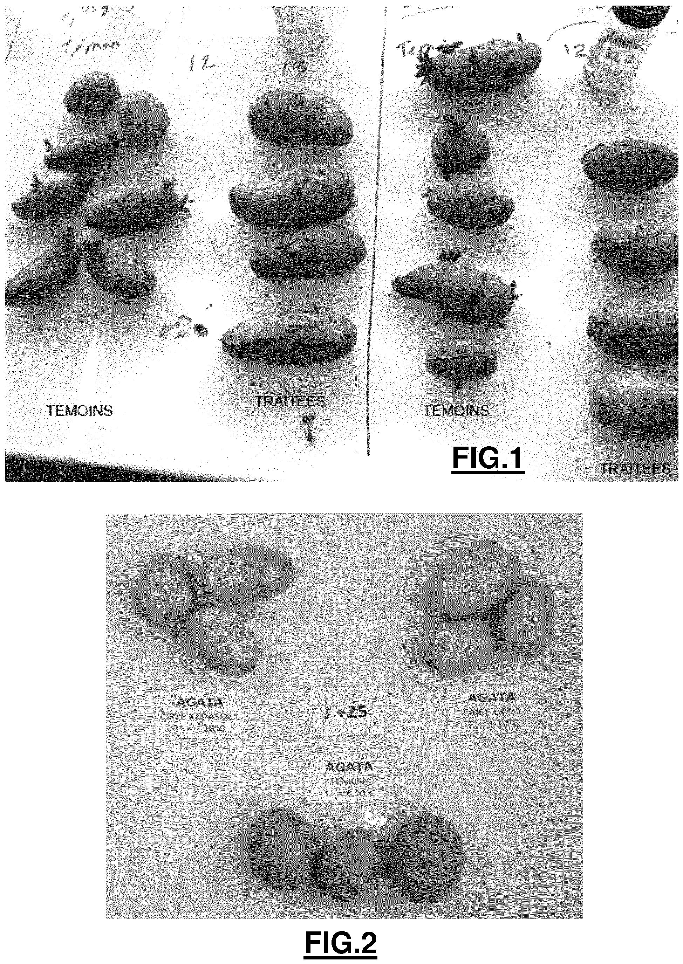

L'invention est notamment illustrée par les exemples et les Figures 1 et 2 suivants.
La Figure 1 illustre l'effet des compositions selon l'invention sur la germination par rapport à des témoins dans les conditions de l'exemple 3.
La Figure 2 illustre l'effet des compositions appliquées selon l'invention sur la germination des pommes de terre comparativement aux compositions et conditions d'application décrites dans WO 2010/031983, tel que décrit dans l'exemple 4.

Les exemples suivants sont donnés à titre illustratif et non limitatif de la présente invention.

### Exemple 1 : Préparation d'une composition selon l'invention

On mélange sous agitation :
- 10 % de lécithine ;
- 35 % de monopropylèneglycol ;
- 31 % d'eau ;
- 10 % d'acide oléique éthoxylé 10 moles ;
- 5 % d'alcool laurique 10 moles;
- 3 % de sucroesters ;
- 6 % de citrate de postassium.

On obtient une solution stable et limpide.

### Exemple 2 : Application

La composition de l'exemple 1 est appliquée sur des pommes de terre en cours de stockage par aspersion ULV, à raison de 0,75 g/kg de pommes de terre.

### Exemple 3 : Détermination de l'effet anti-germinatif

Cette étude a été effectuée pour évaluer l'efficacité de la composition de l'exemple 1 pour inhiber la germination des pommes de terre.

La variété Chérie a été utilisée pour cet essai et à titre de témoin.

Un seul traitement a été effectué pour les Lots 1 et 2 suivants :
- Lot 1 : Pommes de terre traitées et témoin stockées pendant 30 jours après traitement, à température ambiante, à la lumière du jour, sans protection particulière.
- Lot 2 : Pommes de terre traitées et témoin stockées pendant 40 jours après traitement, à température ambiante, à la lumière du jour, sans protection particulière.

Pour chaque Lot, les pommes de terre traitées et témoins ont été comparées visuellement. La Figure 1 illustre les résultats obtenus. Il ressort que la germination est substantiellement inhibée pour les pommes de terre traitées.

### Exemple 4 : Détermination de l'effet anti-germinatif comparé à une composition de résine

Des pommes de terre de la variété Agata ont été traitées par respectivement la composition de l'exemple 1 appliquée selon l'exemple 2 (Lot « cirée exp.1 ») et une composition de résine à base de gomme laque décrite et appliquée selon WO 2010/031983 (lot «cirée xedasol l »). Les pommes de terres sont stockées à 10°C pendant 25 jours après traitement.

Les résultats sont visibles en Figure 2. La formation de germes est inhibée sur les lots traités selon l'invention. On observe également une inhibition du verdissement pour ces lots traités.

## Revendications

1. Procédé de traitement anti-germinatif des bulbes et tubercules comprenant l'application de 0,1 à 2 kg de composition par tonne de bulbes et tubercules, telle que la composition comprend:
- de 0.1 à 20% de un ou plusieurs composants lipophiles choisis parmi les huiles végétales, les huiles minérales, la lécithine, les acides gras et leurs mélanges,
- de 1 à 30% de un émulsifiant ou mélange d'émulsifiants choisi parmi l'acide oléique éthoxylé, l'acool laurique, les sucroesters, et leurs mélanges ,
- de 10 à 80% de un solvant choisi parmi l'eau, le monopropylèneglycol, l'éthanol et leurs mélanges, et
- de 0 à 10% d'anti-oxydant(s)
lesdits pourcentages étant en poids/volume.

2. Procédé selon la revendication 1 telle que le(s) anti-oxydant(s) sont choisis parmi l'acide citrique ou le citrate alcalin.

3. Procédé selon la revendication1 ou 2 telle que la composition comprend :de 0.1 à 10 % de lécithine ;
- de 10 à 80 % de solvant comprenant du monopropylèneglycol et de l'eau ;
- de 1 à 30 % d'émulsifiant(s) choisis parmi l'acide oléique éthoxylé, l'acool laurique, les sucroesters, et leurs mélanges ; et
- de 0,1 à 10% d'acide citrique ou de citrate alcalin.

4. Procédé selon la revendication 1 telle que la composition est sous forme de solution aqueuse ou de dispersion aqueuse.

5. Procédé selon l'une quelconque des revendications précédentes telle que la composition comprend du monopropylèneglycol.

6. Procédé selon l'une quelconque des revendications 1, 4, 5 tel que l'agent anti-oxydant est choisi parmi l'eugénol, l'acide citrique, l'acide ascorbique, l'acide tartrique, l'acide acétique, et les sels de ces acides.

7. Procédé selon l'une quelconque des revendications précédentes telle qu'elle comprend de 1 à 8% d'anti-oxydant(s).

8. Procédé selon l'une quelconque des revendications précédentes tel qu'il comprend l'application sur bulbes ou tubercules humides.

9. Procédé selon l'une quelconque des revendications précédentes comprenant l'application de ladite composition
au moyen d'un dispositif d'enrobage de bulbes ou tubercules, le dispositif (1) ayant une zone d'enrobage comprenant :
- un convoyeur d'enrobage prévu pour entraîner les bulbes ou tubercules selon une direction longitudinale ;
- un dispositif d'application d'une composition d'enrobage sur les bulbes ou tubercules entraînés sur le convoyeur d'enrobage ;
**caractérisé en ce que** le convoyeur d'enrobage comprend un châssis, une pluralité de brosses rotatives fixes selon la direction longitudinale par rapport au châssis, et un ensemble motorisé d'entraînement des brosses en rotation autour d'axes transversaux respectifs par rapport au châssis, les brosses étant disposées de manière à définir ensemble une surface de support et d'entraînement des bulbes ou tubercules et étant prévues pour faire rouler les bulbes ou tubercules pendant l'application de la composition d'enrobage.

## Patentansprüche

1. Verfahren zur Antikeimbehandlung von Zwiebeln und Knollen, aufweisend das Aufbringen von 0,1 bis 2 kg Zusammensetzung pro Tonne Zwiebeln und Knollen, wobei die Zusammensetzung aufweist:
- 0,1 bis 20 % einer oder mehrerer lipophiler Komponenten, ausgewählt aus Pflanzenölen, Mineralölen, Lecithin, Fettsäuren und Mischungen davon,
- 1 bis 30 % eines Emulgators oder einer Mischung von Emulgatoren, ausgewählt aus ethoxylierter Ölsäure, Laurylalkohol, Zuckerestern und Mischungen davon,
- 10 bis 80 % eines Lösungsmittels, ausgewählt aus Wasser, Monopropylenglykol, Ethanol und Mischungen davon, und
- 0 bis 10% Antioxidationsmittel
wobei die Prozentsätze in Gewicht/Volumen angegeben sind.

2. Verfahren gemäß Anspruch 1, wobei das (die) Antioxidationsmittel aus Zitronensäure oder Alkalicitrat ausgewählt wird (werden).

3. Verfahren gemäß Anspruch 1 oder 2, wobei die Zusammensetzung aufweist: 0,1 bis 10% Lecithin,
- 10 bis 80 % Lösungsmittel, aufweisend Monopropylenglykol und Wasser,
- 1 bis 30 % Emulgator(en), ausgewählt aus ethoxylierter Ölsäure, Laurylalkohol, Zuckerestern und Mischungen davon, und
- 0,1 bis 10 % Zitronensäure oder Alkalicitrat.

4. Verfahren gemäß Anspruch 1, wobei die Zusammensetzung in Form einer wässrigen Lösung oder einer wässrigen Dispersion vorliegt.

5. Verfahren gemäß irgendeinem der vorhergehenden Ansprüche, wobei die Zusammensetzung Monopropylenglykol aufweist.

6. Verfahren gemäß irgendeinem der Ansprüche 1, 4, 5, wobei das Antioxidationsmittel aus Eugenol, Zitronensäure, Ascorbinsäure, Weinsäure, Essigsäure und den Salzen dieser Säuren ausgewählt wird.

7. Verfahren gemäß irgendeinem der vorhergehenden Ansprüche, wobei es 1 bis 8 % Antioxidationsmittel enthält.

8. Verfahren gemäß irgendeinem der vorhergehenden Ansprüche, wobei es das Aufbringen auf feuchte Zwiebeln oder Knollen aufweist.

9. Verfahren gemäß irgendeinem der vorhergehenden Ansprüche, aufweisend das Aufbringen der Zusammensetzung
mittels einer Vorrichtung zum Beschichten von Zwiebeln oder Knollen, wobei die Vorrichtung (1) eine Beschichtungszone aufweist, die aufweist:
- ein Beschichtungsförderband, das vorgesehen ist, um die Zwiebeln oder Knollen entlang einer Längsrichtung anzutreiben,
- eine Vorrichtung zum Aufbringen einer Beschichtungszusammensetzung auf die Zwiebeln oder Knollen, die auf dem Beschichtungsförderband angetrieben werden,
**dadurch gekennzeichnet, dass** das Beschichtungsförderband aufweist einen Rahmen, eine Mehrzahl von Drehbürsten, die entlang der Längsrichtung relativ zum Rahmen befestigt sind, und eine motorisierte Anordnung zum drehbaren Antreiben der Bürsten um jeweilige Querachsen relativ zum Rahmen, wobei die Bürsten angeordnet sind, um zusammen eine Fläche zum Tragen und Antreiben der Zwiebeln oder Knollen zu definieren, und vorgesehen sind, um die Zwiebeln oder Knollen während des Aufbringens der Beschichtungszusammensetzung zu rollen.

## Claims

1. An anti-sprouting method for bulbs and tubers comprising the application of 0.1 to 2 kg of the composition per tonne of tubers and bulbs, wherein the composition comprises:
- from 0.1 to 20% of one or more lipophilic components selected from among vegetable oils, mineral oils, lecithin, fatty acids and mixtures thereof,
- from 1 to 30% of an emulsifier or mixture of emulsifiers selected from among ethoxylated oleic acid, lauric acid, sucroesters and their mixtures,
- from 10 to 80% of a solvent selected from among water, monopropylene glycol, ethanol and mixtures thereof, and
- from 0 to 10% of anti-oxydant agent(s).

2. Method according to claim 1 wherein the antioxidant agent is selected from among citric acid, and alkali citrate.

3. Method according to claim 1 or 2, wherein the composition comprises:
- from 0.1 to 0% of lecithine,
- from 10 to 80% of a solvent comprising monopropyleneglycol and water,
- from 1 to 30% of emulsifier(s) selected from among ethoxylated oleic acid, lauric acid, sucroesters and their mixtures, and
- from 0.1 to 10% of citric acid, and alkali citrate.

4. Method according to claim 1 wherein the composition is in the form of an aqueous solution or aqueous dispersion.

5. Method according to anyone of the preceding claims wherein it comprises monopropylene glycol.

6. Method according to anyone of claims 1, 4, 5 wherein the antioxidant agent is selected from among eugenol, citric acid, ascorbic acid, tartaric acid, acetic acid, and salts of these acids.

7. Method according to any preceding claim wherein it comprises from 1 to 8% of anti-oxidant(s).

8. Method according to anyone of the preceding claims wherein it comprises the application on wet bulbs or tubers.

9. Method according to any one of the preceding claims comprising applying the said composition on bulbs or tubers by means of a coating device, wherein the device (1) has a coating zone comprising:
- a coating conveyor for conveying the bulbs or tubers in a longitudinal direction;
- a device for applying a coating composition on the bulbs or tubers conveyed on the coating conveyor;
**characterized in that** the coating conveyor comprises a frame, a plurality of rotating brushes fixed in the longitudinal direction with respect to the frame, and a motor assembly to rotate the brushes about their respective axes transverse to the chassis, wherein the brushes are arranged in order to define together a surface for the supporting and conveying of the bulbs or tubers, and wherein the bulbs or tubers are rolled over during application of the coating composition.
